# DEMANDE DE BREVET EUROPEEN

(11) **EP 0 892 568 A1**
(43) Date de publication de la demande: **20.01.1999**
(21) Numéro de dépôt: 98401701.2
(22) Date de dépôt: 06.07.1998
(51) Int. Cl.: H04Q 7/36

(54) **Système de radiotélécommunications avec un terminal mobile fonctionnant en mode cellulaire et en mode sans fil**

(30) Priorité: 17.07.1997 FR 9709068
(71) Demandeur: ALCATEL ALSTHOM COMPAGNIE GENERALE D'ELECTRICITE, 75008 Paris (FR)
(72) Inventeur: Rousseau, Emmanuel, 75019 Paris (FR); Vasnier, Frédéric, 92700 Colombes (FR)
(74) Mandataire: El Manouni, Josiane

(57) **Abrégé**

L'invention concerne un système de radiotélécommunications comprenant un terminal mobile (2) muni d'un module d'identification d'abonné (26), destiné à fonctionner dans un réseau cellulaire comportant une pluralités de cellules (C₁ à C₇). Le système comporte une station de base privée (3) indépendante du réseau cellulaire, et connectée à un réseau filaire de télécommunications (5) La station de base privée est située au moins en partie dans l'une (C₁) des cellules du réseau cellulaire à laquelle le réseau cellulaire a alloué au moins une fréquence parmi toutes les fréquences possibles du réseau cellulaire; le terminal mobile peut, s'il est situé dans une zone proche (A) de la station de base privée (3), fonctionner en mode sans fil, lors duquel il communique avec le réseau filaire par l'intermédiaire d'une communication par voie radio avec la station de base privée à au moins une fréquence sélectionnée dans un ensemble prédéterminé de fréquences choisies parmi toutes les fréquences possibles du réseau cellulaire exceptées au moins celles allouées à ladite cellule, cet ensemble étant stocké au préalable dans le module d'identification d'abonné (26) ou dans une zone mémoire du terminal.

Selon l'invention, ledit ensemble est transmis au terminal mobile par voie radio depuis une station de base du réseau cellulaire.

## Description

La présente invention concerne un système de radiotélécommunications comprenant un terminal mobile muni d'un module d'identification d'abonné, et destiné à fonctionner selon un premier mode dit cellulaire dans un réseau cellulaire comportant une pluralités de cellules.

Un réseau cellulaire, par exemple numérique et utilisant un système normalisé tel que le GSM (initiales anglo-saxonnes mises pour Global System for Mobile communications) ou le DCS (initiales anglo-saxonnes mises pour Digital Communication System ) ou encore le PCS 1900 (initiales anglo-saxonnes mises pour Personal Communication System), a pour fonction principale d'acheminer, par voie radio sur une fréquence porteuse, une communication entre une station de base du réseau et un terminal mobile d'un utilisateur abonné au réseau. Chaque réseau cellulaire se voit attribuer une certaine gamme de fréquences limitée par rapport à toutes les fréquences utilisables dans le système considéré. A titre d'exemple, le GSM comprend 125 fréquences porteuses possibles dont une majeure partie est partagée, pour le moment et dans le cas du territoire français, entre deux principaux opérateurs propriétaires d'un réseau cellulaire numérique.

En outre, le territoire couvert par un réseau cellulaire donné est découpé en cellules, chaque cellule comprenant généralement une station de base susceptible de communiquer avec tous les terminaux mobiles situés à un moment donné dans cette cellule. Une découpe bien connue donnée à titre d'exemple consiste à choisir des cellules de forme théorique hexagonale, de même dimension et adjacentes. On peut ainsi définir un ensemble particulier de cellules, appelé motif, par exemple un motif à sept cellules constitué d'une cellule centrale entourée de six cellules adjacentes.

Par ailleurs, les stations de base et les terminaux mobiles d'un réseau cellulaire ont une portée limitée, c'est-à-dire qu'au-delà d'une certaine distance, la communication n'est plus possible du fait de l'atténuation de la fréquence porteuse. Il est donc possible qu'une même fréquence porteuse soit utilisée à différents endroits, sous réserve que ces endroits soient suffisamment éloignés. Ceci est d'autant plus important que chaque réseau ne possède, comme indiqué précédemment, qu'un nombre limité de fréquences porteuses pour un nombre toujours croissant d'abonnés. Ainsi, chaque réseau cellulaire définit un plan de réutilisation de fréquences, et l'on citera à titre d'exemple le motif à sept cellules déjà évoqué. Dans un tel motif, des fréquences porteuses différentes sont attribuées à chaque cellule, chaque cellule se voyant allouer en outre une ou plusieurs fréquences porteuses. Le motif est dupliqué par translation de sorte que les cellules voisines d'une cellule donnée du motif initial, qui sont les cellules les plus proches de la cellule donnée et qui utilisent les mêmes fréquences, soient au nombre de six, régulièrement réparties sur un cercle dont le centre coïncide avec le centre de la cellule donnée. On a donc défini un nouveau motif appelé motif de réutilisation des fréquences. La structure du réseau cellulaire est ainsi parfaitement définie.

L'essor de la téléphonie mobile est tel qu'un nombre important et sans cesse croissant de particuliers possèdent à l'heure actuelle un terminal mobile. Or, parmi ces utilisateurs, séduits par le concept de la communication en toute liberté, un bon nombre possèdent également ou sont susceptibles de posséder à leur domicile un téléphone sans fil leur permettant d'être en communication tout en se déplaçant librement dans une zone proche d'une station fixée à leur domicile, avec laquelle le téléphone sans fil communique par voie radio, la station étant elle-même connectée par fil à un réseau filaire de télécommunication, par exemple un réseau du type PSTN (initiales anglo-saxonnes mises pour Public Switch Telecommunication Network).

Le concept de base de la présente invention réside dans le fait qu'il serait incontestablement intéressant pour l'utilisateur de posséder un unique appareil portatif lui permettant de fonctionner non seulement dans un mode dit cellulaire, c'est-à-dire via un réseau cellulaire auquel il serait abonné, mais aussi dans un mode dit sans fil dès lors qu'il se trouve dans une zone prédéterminée, en l'occurrence son domicile ou son lieu de travail.

Un but de la présente invention est donc de proposer un système de radiotélécommunications comprenant un terminal mobile destiné à fonctionner selon un premier mode dit cellulaire dans un réseau cellulaire numérique, et un second mode sans fil.

Les problèmes à résoudre dans ce but sont multiples :
- Il est nécessaire dans un premier temps d'allouer au terminal mobile une ou plusieurs fréquences utilisables seulement dans le second mode sans fil, pour communiquer par voie radio entre le terminal mobile et une station privée connectée à un réseau filaire de télécommunications. Or, ces fréquences doivent nécessairement être des fréquences du système cellulaire si l'on souhaite pouvoir utiliser les terminaux mobiles déjà existants. En outre, ces fréquences doivent nécessairement être des fréquences du réseau cellulaire auquel est abonné l'utilisateur. En effet, si l'on choisissait d'autres fréquences, ces dernières seraient forcément des fréquences utilisées dans un autre réseau cellulaire, appartenant généralement à un autre opérateur, ce qui n'est pas sans poser de difficultés.
- En conséquence de ce qui précède, les fréquences utilisables en mode sans fil ne doivent pas venir perturber la cellule dans laquelle se trouve le terminal mobile lorsqu'il fonctionne en mode sans fil. Une solution aurait pu consister à réaliser du saut de fréquences sur les différentes fréquences utilisées dans le réseau cellulaire de manière à effectuer une moyenne du bruit émis, une perturbation moindre en résultant. Cependant, une telle solution n'a pas été retenue par la Demanderesse, car elle n'est efficace que si le saut de fréquences peut être effectué sur un grand nombre de fréquences, par exemple sur les 125 fréquences du système GSM, et non sur le nombre limité de fréquences réellement allouées à un réseau cellulaire. Il est donc apparu nécessaire d'allouer des fréquences utilisables seulement en mode sans fil en fonction du plan de réutilisation de fréquences défini pour le réseau cellulaire, et de la localisation précise de la station privée.
- Cette allocation de fréquences dans le mode sans fil doit être transparente pour l'utilisateur. En effet, une solution aurait pu consister à prévoir sur la station privée des commutateurs permettant de sélectionner différentes fréquences utilisables en mode sans fil sans perturber le réseau cellulaire. Cette solution est cependant peu séduisante pour l'utilisateur.
- Cette allocation de fréquences dans le mode sans fil doit être en outre facile à mettre en oeuvre et utiliser au maximum les moyens déjà existants dans le réseau cellulaire et le terminal mobile.

Par ailleurs, il apparaît souhaitable que l'allocation de fréquences pour le mode sans fil soit facile à mettre en oeuvre et transparente pour l'utilisateur, notamment dans le cas où ce dernier est déjà abonné au réseau cellulaire et souhaite s'équiper du mode sans fil, et soit en outre aisément modifiable notamment dans le cas où l'utilisateur, propriétaire d'un terminal mobile fonctionnant déjà selon les deux modes, déménage. En effet, dans ce dernier cas, il est nécessaire d'allouer un nouvel ensemble d'une ou plusieurs fréquences, en fonction toujours du plan de réutilisation des fréquences du réseau et de l'adresse du nouveau domicile.

Les problèmes et objectifs sont respectivement atteints grâce à la présente invention qui a pour objet un système de radiotélécommunications comprenant un terminal mobile muni d'un module d'identification d'abonné et destiné à fonctionner selon un premier mode dit cellulaire dans un réseau cellulaire comportant une pluralités de cellules, le système comportant en outre une station de base privée indépendante dudit réseau cellulaire et connectée par fil à un réseau filaire de télécommunications, ladite station de base privée étant située au moins partiellement dans l'une des cellules du réseau cellulaire à laquelle le réseau cellulaire a alloué, selon un plan de réutilisation des fréquences prédéterminé, au moins une fréquence parmi toutes les fréquences possibles du réseau cellulaire, le terminal mobile comportant des moyens de sélection lui permettant, lorsqu'il est situé dans une zone prédéterminée à proximité de la station de base privée, de fonctionner selon un second mode dit sans fil, dans lequel il peut établir ou recevoir une communication en provenance ou à destination dudit réseau filaire de télécommunications par l'intermédiaire d'une communication par voie radio avec ladite station de base privée, la communication par voie radio s'effectuant à au moins une fréquence sélectionnée dans un ensemble prédéterminé d'une ou plusieurs fréquences choisies également parmi toutes les fréquences possibles du réseau cellulaire exceptées au moins celles allouées à ladite cellule, lesdits moyens de sélection comprenant un moyen de stockage dudit ensemble prédéterminé d'une ou plusieurs fréquences dans une zone de mémorisation du couple formé par le terminal et le module d'identification d'abonné, caractérisé en ce que ledit ensemble prédéterminé d'une ou plusieurs fréquences est transmis au préalable pour mémorisation dans ledit moyen de stockage par voie radio, lorsque le terminal mobile fonctionne selon le mode dit cellulaire, depuis une station de base du réseau cellulaire la plus proche du terminal mobile.

De préférence, la zone de mémorisation est située dans le module d'identification d'abonné.

De manière avantageuse, ledit moyen de stockage comprend un fichier élémentaire du module d'identification d'abonné.

En outre, ledit ensemble prédéterminé d'une ou plusieurs fréquences est avantageusement transmis sous la forme d'un message de service court point à point, de préférence de classe 2 afin d'empêcher l'utilisateur de venir lire et ou écrire dans les moyens de stockage.

D'autres caractéristiques et avantages de la présente invention apparaîtront clairement au vu de la description suivante, faite en référence aux figures annexées dans lesquelles :
- la figure 1 illustre schématiquement différentes parties d'un système de radiotélécommunications conforme à la présente invention;
- la figure 2 illustre, sous forme de blocs simplifiés, différentes parties d'un terminal mobile conforme à la présente invention;
- la figure 3 illustre schématiquement différentes parties d'un système de radiotélécommunications pour lequel l'ensemble des fréquences utilisables en mode sans fil sont transmises par le réseau cellulaire.

Pour faciliter la compréhension de l'invention, les éléments communs aux trois figures portent les mêmes références.

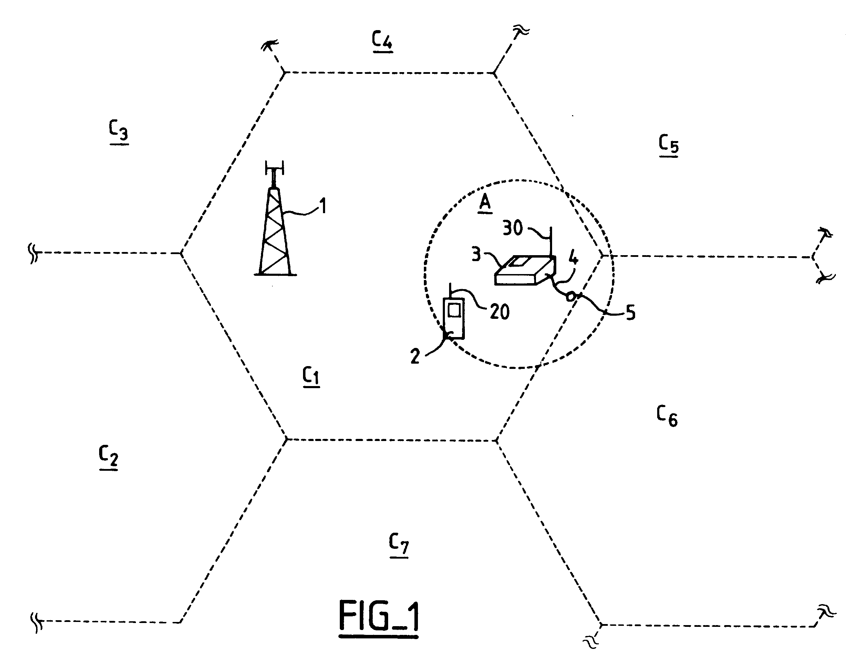

La figure 1 représente partiellement un motif à sept cellules C₁ à C₇ pour un réseau cellulaire, par exemple numérique de type GSM. Chaque cellule C₁ à C₇ est susceptible de communiquer par voie radio avec tous les terminaux mobiles situés dans sa zone de couverture, en utilisant au moins une fréquence allouée par le réseau, et différente de celles utilisées dans les cellules adjacentes. Ces communications s'établissent plus précisément entre une station de base 1 affectée à chaque cellule et un terminal mobile 2 abonné au réseau cellulaire considéré.

Dans le système de radiotélécommunications conforme à la présente invention, le terminal mobile 2, outre son fonctionnement selon le mode précédent dit cellulaire, peut également, dans certaines conditions explicitées dans la suite, fonctionner selon un second mode dit sans fil. Pour ce second mode sans fil, le système de radiotélécommunications comporte une station de base privée 3, indépendante du réseau cellulaire. Cette station de base privée 3 est en outre connectée par un fil 4 à un réseau filaire de télécommunications, par exemple du type PSTN, globalement représenté sur la figure 1 par la référence 5. Typiquement, la station de base privée 3 est située au domicile de l'utilisateur, abonné non seulement au réseau cellulaire mais aussi au réseau filaire, ou encore sur son lieu de travail. Le fonctionnement selon le mode sans fil du terminal mobile n'est possible que lorsque le terminal est situé dans une zone A délimitée dans l'exemple de la figure 1 par un cercle en trait interrompu, proche de et entourant la station de base privée 3. Typiquement, la zone A peut présenter un diamètre de quelques dizaines de mètres. Durant une communication sans fil, le terminal mobile 2 et la station de base privée 3 vont communiquer, via leurs antennes respectives 20 et 30, par voie radio sur au moins une fréquence porteuse choisie dans un ensemble prédéterminé d'une ou plusieurs fréquences. La communication transite par ailleurs sur le réseau filaire 5.

Comme on le voit sur la figure 1, la station de base privée 3, se trouve dans la cellule C₁. Par suite, la zone A se trouve également, au moins partiellement, dans la cellule C₁. Pour les raisons invoquées précédemment, l'ensemble prédéterminé d'une ou plusieurs fréquences ne doit pas comprendre les fréquences allouées à la cellule C₁. De préférence, ce même ensemble ne comprendra pas non plus les fréquences allouées aux cellules C₂ à C₇ adjacentes à la cellule C₁. De cette manière, les fréquences utilisées en mode sans fil ne pourront être que des fréquences utilisées par des cellules du réseau suffisamment éloignées de la station de base privée 3 pour qu'il n'y ait pas d'interférences. Ceci est d'autant plus vrai que la puissance d'émission nécessaire au niveau du terminal portatif et de la station de base privée est très faible, typiquement de l'ordre de quelques centaines de milliwatts.

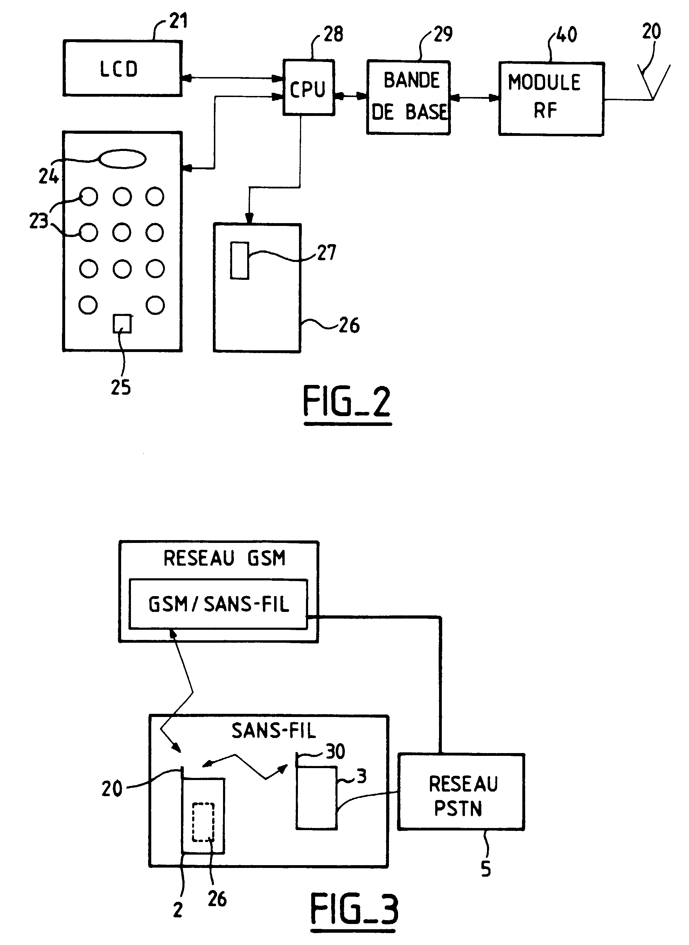

En référence à la figure 2, un terminal mobile 2 conforme à la présente invention comporte principalement, vu de l'extérieur, un écran d'affichage 21, par exemple du type LCD, un module d'interface homme-machine 22 comprenant par exemple classiquement des touches 23 pour la numérotation, et un moyen de navigation 24 pour permettre à l'utilisateur de se déplacer dans des menus et sous-menus correspondant à des fonctionnalités offertes par le terminal. Le terminal selon l'invention comporte en outre des moyens de sélection lui permettant de choisir son mode de fonctionnement entre le mode cellulaire et le mode sans fil. Sur la figure 2, ces moyens de sélection sont constitués par une touche dédiée 25 du module d'interface homme-machine; En variante, ces moyens de sélection pourraient être accessibles via le moyen de navigation 24, à l'intérieur d'un menu particulier, ou encore être composés d'un commutateur sur le boîtier du terminal.

En outre, le terminal mobile comprend des moyens de lecture (non représentés) d'un module 26 d'identification d'abonné au réseau cellulaire, classiquement appelé carte SIM (initiales anglo-saxonnes mises pour Subscriber ldentity Module) dans le cas d'un système GSM. Ce module 26 comporte classiquement des moyens 27 pour stoker diverses informations, que nous ne détaillerons pas ici. Pour permettre le fonctionnement du terminal, les éléments précédents sont reliés à un module de contrôle 28 comprenant notamment un microprocesseur. Enfin, le terminal possède un module 29 de traitement des signaux et un module radiofréquence 40 relié à l'antenne 20 du terminal. Ces différents modules, bien connus de l'homme du métier, ne seront pas détaillés ici.

Selon une caractéristique essentielle de l'invention, l'ensemble prédéterminé d'une ou plusieurs fréquences utilisables en mode sans fil est mémorisé au préalable dans des moyens de stockage dans une zone de mémorisation du couple formé par le terminal mobile et le module d'identification d'abonné 26. De préférence, comme représenté sur la figure, cette zone de mémorisation est située dans le module d'identification d'abonné, par exemple dans un fichier communément appelé fichier élémentaire, et les moyens de stockage correspondent aux moyens 27.

Ainsi, lorsque l'utilisateur choisit, par les moyens de sélection 25, le mode sans fil parce qu'il est à son domicile, le module de contrôle 28 va venir lire les informations contenues dans les moyens de stockage 27 du module d'identification d'abonné 26, et sélectionner la fréquence à laquelle le terminal mobile doit fonctionner. si l'ensemble prédéterminé comporte plusieurs fréquence, le terminal mobile peut avantageusement fonctionner en saut de fréquence pour réduire les perturbations.

En variante, la zone de mémorisation pourrait être une zone mémoire dans le terminal.

Il peut en outre arriver que l'utilisateur, souhaitant effectuer un appel sortant, oublie de sélectionner le mode sans fil, alors qu'il se trouve dans la zone A de couverture de la station de base privée. Or, il est connu que les communications via le réseau cellulaire sont plus onéreuses que celles transitant via le réseau filaire. Ainsi, dans le cas où l'opérateur du réseau cellulaire est le même que l'opérateur du réseau filaire, ou bien dans un cas d'accord de partenariat entre les opérateurs, un mode de réalisation particulièrement avantageux du système selon l'invention est de prévoir des moyens pour établir prioritairement la communication via le réseau filaire. Ces moyens peuvent par exemple être localisés au niveau du terminal, lequel écoute constamment les deux réseaux. Si, lors de l'établissement d'un appel sortant, le terminal se rend compte qu'il est dans la zone A couverte par la station de base privée, il passera obligatoirement sa communication via le réseau filaire.

Par ailleurs, pour recevoir un appel entrant, on associe au terminal mobile deux numéros de téléphone, un premier numéro par lequel il pourra recevoir un appel via le réseau cellulaire, et un second numéro de téléphone par lequel il pourra recevoir un appel via le réseau filaire, sous réserve bien entendu qu'il se trouve dans la zone A de couverture de la station de base privée.

Concernant l'opération de stockage proprement dite de l'ensemble d'une ou plusieurs fréquences utilisables seulement en mode sans fil, plusieurs solutions peuvent être envisagées:

Considérons dans un premier temps le cas d'une personne qui achète pour la première fois un terminal mobile et s'abonne à un réseau cellulaire donné. On peut alors envisager que l'opérateur propriétaire du réseau cellulaire, connaissant l'adresse du domicile de cet acheteur et son numéro de téléphone lié au réseau filaire, lui délivre un module d'identification d'abonné comprenant déjà en mémoire, dans ses moyens de stockage, ledit ensemble.

La solution précédente n'est cependant pas envisageable dans les cas plus probables où l'utilisateur est déjà abonné au réseau cellulaire, et souhaite obtenir postérieurement la fonctionnalité sans fil en achetant auprès de l'opérateur une station de base privée. En outre, lorsque l'utilisateur d'un terminal mobile fonctionnant en mode cellulaire et en mode sans fil déménage, il lui serait nécessaire de renvoyer son module d'identification d'abonné à l'opérateur pour que ce dernier effectue les modifications qui s'imposent.

Pour résoudre la limitation précédente, la présente invention propose, selon une autre caractéristique importante, que ledit ensemble soit transmis au préalable pour mémorisation dans les moyens de stockage par voie radio, depuis une station de base du réseau cellulaire. Plus précisément, lorsque l'utilisateur achète sa station de base privée, il communique l'adresse de son domicile. L'opérateur du réseau cellulaire détermine alors, en fonction de son plan de réutilisation de fréquences et de l'adresse du domicile, l'ensemble des fréquences utilisables en mode sans fil. Dès lors que le terminal est sous tension en mode cellulaire, cet ensemble peut lui être transmis via la station de base du réseau cellulaire qui est la plus proche du terminal mobile au moment de la transmission. Avantageusement, la transmission s'effectue au moyen d'un message de service court point à point. De préférence, ce message est de classe 2, de façon à empêcher l'utilisateur de venir lire ou écrire dans les moyens de stockage.

En cas de déménagement, il suffit que l'utilisateur prévienne l'opérateur du réseau cellulaire de sa nouvelle adresse. Ce dernier modifie alors l'ensemble de fréquences utilisables en mode sans fil, et lui transmet comme précédemment par voie radio.

Si l'opérateur du réseau cellulaire est identique au ou en accord de partenariat avec l'opérateur du réseau filaire, cette opération de stockage de l'ensemble ou de modification dudit ensemble en cas de déménagement, peut même être complètement transparente pour l'utilisateur, ce dernier n'ayant qu'à se faire attribuer une ligne sur le réseau filaire. Cette situation est illustrée schématiquement sur la figure 3 qui montre qu'un échange d'informations est possible entre le réseau filaire 5 et le réseau cellulaire, et plus particulièrement les éléments du réseau cellulaire qui vont servir à l'envoi d'un message court au terminal mobile 2.

En résumé, la présente invention propose un système de radiotélécommunications dans lequel un même appareil portatif peut être utilisé dans un réseau cellulaire et dans un réseau filaire selon un mode sans fil. Dans le mode sans fil, le terminal ne gêne en rien le réseau cellulaire. En outre, le système selon l'invention utilise au maximum les éléments déjà existants dans la téléphonie mobile, et son fonctionnement peut être totalement transparent pour l'utilisateur.

Bien que la description ait été faite en relation à un réseau cellulaire numérique de type GSM, on comprendra aisément que l'invention s'applique à tout type de réseaux cellulaires.

## Revendications

1. Système de radiotélécommunications comprenant un terminal mobile (2) muni d'un module d'identification d'abonné (26) et destiné à fonctionner selon un premier mode dit cellulaire dans un réseau cellulaire comportant une pluralités de cellules (C₁ à C₇ ), le système comportant en outre une station de base privée (3) indépendante dudit réseau cellulaire et connectée par fil à un réseau filaire de télécommunications (5), ladite station de base privée étant située au moins partiellement dans l'une (C₁) des cellules du réseau cellulaire à laquelle le réseau cellulaire a alloué, selon un plan de réutilisation des fréquences prédéterminé, au moins une fréquence parmi toutes les fréquences possibles du réseau cellulaire, le terminal mobile comportant des moyens (24; 25) de sélection lui permettant, lorsqu'il est situé dans une zone (A) prédéterminée à proximité de la station de base privée (3), de fonctionner selon un second mode dit sans fil, dans lequel il peut établir ou recevoir une communication en provenance ou à destination dudit réseau filaire de télécommunications par l'intermédiaire d'une communication par voie radio avec ladite station de base privée, la communication par voie radio s'effectuant à au moins une fréquence sélectionnée dans un ensemble prédéterminé d'une ou plusieurs fréquences choisies également parmi toutes les fréquences possibles du réseau cellulaire exceptées au moins celles allouées à ladite cellule, lesdits moyens de sélection comprenant un moyen de stockage (27) dudit ensemble prédéterminé d'une ou plusieurs fréquences dans une zone de mémorisation du couple formé par le terminal et le module d'identification d'abonné (26), caractérisé en ce que ledit ensemble prédéterminé d'une ou plusieurs fréquences est transmis au préalable pour mémorisation dans ledit moyen de stockage (27) par voie radio, lorsque le terminal mobile fonctionne selon le mode dit cellulaire, depuis une station de base (1) du réseau cellulaire la plus proche du terminal mobile.

2. Système de radiotélécommunications selon la revendication 1, caractérisé en ce la zone de mémorisation est située dans le module d'identification d'abonné (26).

3. Système de radiotélécommunications selon la revendication 2, caractérisé en ce que ledit moyen de stockage (27) comprend un fichier élémentaire du module d'identification d'abonné (26).

4. Système de radiotélécommunications selon lune quelconque des revendications précédentes, caractérisé en ce que ledit ensemble prédéterminé d'une ou plusieurs fréquences est transmis sous la forme d'un message de service court point à point.

5. Système de radiotélécommunications selon la revendication 4, caractérisé en ce que ledit message de service court point à point est de classe 2.

6. Système de radiotélécommunications selon l'une quelconque des revendications précédentes, caractérisé en ce que lesdits moyens de sélection comportent un moyen de commutation (25) accessible par l'utilisateur du terminal mobile pour permettre à l'utilisateur de sélectionner le mode de fonctionnement du terminal mobile entre le mode dit cellulaire et le mode dit sans fil.

7. Système de radiotélécommunications selon l'une quelconque des revendications précédentes, caractérisé en ce que le terminal mobile est associé à deux numéros de téléphones grâce auxquels il peut recevoir un appel entrant, un premier numéro d'appel par lequel l'appel entrant provient du réseau cellulaire, et un second numéro d'appel par lequel l'appel entrant provient du réseau filaire de télécommunications (5).

8. Système de radiotélécommunications selon l'une quelconque des revendications précédentes, caractérisé en ce que, le terminal mobile établissant un appel sortant via le réseau cellulaire alors que ledit terminal mobile est situé dans ladite zone (A) à proximité de la station de base privée, le réseau cellulaire comporte des moyens pour établir prioritairement la communication via le réseau filaire de télécommunications (5).

9. Système de radiotélécommunications selon l'une quelconque des revendications précédentes, caractérisé en ce que les fréquences allouées aux cellules adjacentes à ladite cellule sont également exclues dudit ensemble prédéterminé d'une ou plusieurs fréquences.
